# EUROPEAN PATENT APPLICATION

(11) **EP 4 465 390 A1**
(43) Date of publication of application: **20.11.2024**
(21) Application number: 24176462.0
(22) Date of filing: 16.05.2024
(51) Int. Cl.: H01M 8/008, C22B 1/00, C22B 7/00, C22B 11/00

(54) **FUEL CELL STACK AND MEMBRANE ELECTRODE ASSEMBLY DISASSEMBLY FOR COMPONENT SEPARATION AND RECYCLING**

(30) Priority: 16.05.2023 US 202363502579 P
(71) Applicant: Plug Power, Inc., Latham, NY 12110 (US); Worcester Polytechnic Institute, Worcester, MA 01609 (US)
(72) Inventor: SWIDER LYONS, Karen, Latham, New York, 12110 (US); YANG, Fan, Latham, New York, 12110 (US); LIU, Zhenyu, Latham, New York, 12110 (US); WANG, Yan, Worcester, Massachusetts, 01609 (US); YAO, Zeyi, Worcester, Massachusetts, 01609 (US); ZHENG, Yadong, Worcester, Massachusetts, 01609 (US); JIN, Wenting, Worcester, Massachusetts, 01609 (US)
(74) Representative: Buzzi, Notaro & Antonielli d'Oulx S.p.A.

(57) **Abstract**

The present invention provides a method of fuel cell recycling, including inserting a fuel cell in a solution to loosen a bond between a first plate and a membrane electrode assembly and a second plate and the membrane electrode assembly of the fuel cell, separating the membrane electrode assembly from the first plate and the second plate, and acid leaching the membrane electrode assembly to obtain a precious metal.

## Description

### Incorporation by Reference:

This application claims the benefit under 35 U.S.C. § 119(e) of U.S. Provisional Application No. 63/502,579, titled "Electrolyzer and Fuel Cell Stack and Membrane Electrode Assembly Disassembly for Component Separation and Recycling", filed May 16, 2023, the complete disclosure of which is hereby incorporated by reference in its entirety. This application is also related to U.S. Non-Provisional Application No. ___, titled **ELECTROLYZER AND MEMBRANE ELECTRODE ASSEMBLY DISASSEMBLY FOR COMPONENT SEPARATION AND RECYCLING,** filed May 16, 2024 (Attorney Docket No. 1404.370B), the complete disclosure of both of the above indicated patent applications are hereby incorporated by reference in their entirety.

### Field of the Invention:

The present invention relates to fuel cells. More specifically, but not exclusively, the present invention relates to methods of disassembly and component recycling of fuel cells.

### Background:

Hydrogen fuel cells are key technologies that may contribute toward net zero energy emissions. As a result, nations worldwide are increasing manufacturing of these technologies. As these technologies are scaled, they may need to be recycled because: fuel cells contain high value precious group metal (PGM) electrocatalysts, such as platinum and iridium that are in limited supply; solid electrolytes in the technologies contain high value perfluorosulfonic acids (PFSAs); and PFSAs are part of a general class of per-fluorinated and poly-fluorinated alkyl substances (PFAS), which are under increasing environmental regulations requiring recycling with no or limited chemical release into the environment. The fluorinated compounds in the membrane and catalyst layers may comprise approximately 35% of the cost of a fuel cell membrane electrode assembly (MEA), and the PGMs may comprise 50% of the cost of the MEA. Despite their robustness, the membranes and PGM catalysts may degrade during operation of fuel cells. For the materials to be recycled and reused in new fuel cells, the membranes and PGM catalysts may need to be taken back to an increased purity and remanufactured.

A fuel cell membrane electrode assembly may contain approximately 250-µm-thick gas diffusion layers (GDL) with a microporous layer (MPL) and approximately 10-µm-thick anode and cathode catalyst layers (CL) on an approximately 10-µm-thick polymer electrolyte membrane (PEM). The PEM is typically made of PFSAs and often contains cerium and/or manganese. The PEM may also be made primarily of a hydrocarbon membrane or contain predominantly hydrocarbons with some fluorinated sites. The PEM membrane may be supported on a porous membrane which may be made of expanded polytetrafluoroethylene (PTFE). The GDL may contain carbon fiber and PTFE binder. The MPL may contain carbon black and PTFE binder. The catalyst layers may contain platinum (Pt) supported on carbon (C) black, transition alloys and traces of iridium, and/or PFSA and cerium and manganese. A spent MEA may contain sodium, chloride, ammonia, and/or iron. The MEA, PEM, and GDL may be pressed together in the fuel cell and become compacted or sealed together.

To make a fuel cell stack, the MEAs in fuel cells may be sealed and compressed between bipolar plates comprising carbon, stainless steel, and/or titanium. The area of a fuel cell MEA may range from about 100 to 400 cm², and a stack may contain 20 to 400 cells compressed between endplates.

As fuel cell manufacturing is scaled to meet demand, projections estimate that fuel cell manufacturing rates will be approximately 1 to 2 seconds per cell. As the industry matures, the MEAs may need to be recycled at the same rate as the MEAs are manufactured, approximately 1 MEA per second for fuel cells. The stacks must also be disassembled at the same rate. The disassembly is challenging in part because all the MEA layers may become stuck together during operation.

Thus, a recycling process is needed to disassemble stacks into plates and membrane electrode assemblies, disassemble the MEAs into chemical constituents, such that the chemical constituents can be remanufactured into new components.

### Summary of the Invention:

The present invention provides, in a first aspect, a method of fuel cell recycling, including inserting a fuel cell in a solution to loosen a bond between a first plate and a membrane electrode assembly and a second plate and the membrane electrode assembly of the fuel cell, separating the membrane electrode assembly from the first plate and the second plate, and acid leaching the membrane electrode assembly to obtain a precious metal.

The present invention provides, in a second aspect, a method of fuel cell recycling, including applying a solvent to a first plate, a second plate, and a membrane electrode assembly of the fuel cell to loosen a bond between the first plate and the membrane electrode assembly and the second plate and the membrane electrode assembly of the fuel cell, separating the membrane electrode assembly from the first plate and the second plate.

### Brief Description of the Drawings:

The accompanying drawings, which are incorporated in and constitute a part of the specification, illustrate embodiments of the invention and together with the detailed description herein, serve to explain the principles of the invention. The drawings are only for purposes of illustrated preferred embodiments and are not to be construed as limiting the invention. It is emphasized that specific processes depicted within are not meant to confine the processes to any specific order or necessitate any specific step. Other processes may be added, omitted, or adapted as necessary. Additionally, specific illustrations of parts should not be construed as limiting, as assemblies may have different overall assemblies and may adapt over time. Any mention of a specific compound or condition may also be adapted as described within the detailed description of the invention. In accordance with the standard practice in the industry, various features are not drawn to scale. In fact, the dimensions of the various features may be arbitrarily increased or reduced for clarity of discussion. The foregoing and other objects, features and advantages of the invention are apparent from the following detailed description taken in conjunction with the accompanying drawings in which:
**FIG.** 1 is block diagram of a fuel cell system in accordance with an aspect of the present disclosure;
**FIG. 2** is a flowchart for recycling a fuel cell stack, in accordance with an aspect of the present disclosure;
**FIG. 3** is a side view of an automated disassembly system for separating the fuel cell stack of FIG. 2, in accordance with an aspect of the present disclosure;
**FIG. 4** is a flowchart for a sub-process diagram of the acid leaching process of FIG. 2, in accordance with an aspect of the present disclosure;
**FIG. 5** is a table of various conditions of the acid leaching process of FIG. 2, in accordance with an aspect of the present disclosure;
**FIG. 6** is flowchart for a sub-process of the delamination process of FIG. 2, in accordance with an aspect of the present disclosure;
**FIG. 7** is a flowchart for a sub-process diagram of the filtration process of FIG. 2, in accordance with an aspect of the present disclosure;
**FIG. 8** is a flowchart for a sub-process diagram of the alkaline sintering process of FIG. 2, in accordance with an aspect of the present disclosure; and
**FIG. 9** is a process diagram depicting a closed loop recycling process for fuel cells, in accordance with an aspect of the present disclosure.

### Detailed Description:

The present invention will be discussed hereinafter in detail in terms of various exemplary embodiments according to the present invention with reference to the accompanying drawings. In the following detailed description, numerous specific details are set forth in order to provide a thorough understanding of the present invention. It will be obvious, however, to those skilled in the art that the present invention may be practiced without these specific details. In other instances, well-known structures are not shown in detail in order to avoid unnecessary obscuring of the present invention.

Thus, all the implementations described below are exemplary implementations provided to enable persons skilled in the art to make or use the embodiments of the disclosure and are not intended to limit the scope of the disclosure, which is defined by the claims. As used herein, the word "exemplary" or "illustrative" means "serving as an example, instance, or illustration." Any implementation described herein as "exemplary" or "illustrative" is not necessarily to be construed as preferred or advantageous over other implementations.

As used herein, "about" or "approximately," when used in connection with a numerical variable, generally refers to the value of the variable and to all values of the variable that are within the experimental error (e.g., within the 95% confidence interval for the mean) or within ± 10% of the indicated value, whichever is greater.

Where a range of values is provided, it is understood that each intervening value, to the tenth of the unit of the lower limit unless the context clearly dictates otherwise, between the upper and lower limit of that range and any other stated or intervening value in that stated range, is encompassed within the present disclosure. The upper and lower limits of these smaller ranges may independently be included in the smaller ranges and are also encompassed within the present disclosure, subject to any specifically excluded limit in the stated range. Where the stated range includes one or both of the limits, ranges excluding either or both of those included limits are also included in the present disclosure.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrequited number may be a number, which, in the context in which it is presented, provides the substantial equivalent of the specifically recited number.

Furthermore, there is no intention to be bound by any expressed or implied theory presented in the preceding technical field, background, brief summary or the following detailed description. It is also to be understood that the specific devices and processes illustrated in the attached drawings, and described in the following specification, are simply exemplary embodiments of the inventive concepts defined in the appended claims. Hence, specific dimensions and other physical characteristics relating to the embodiments disclosed herein are not to be considered as limiting, unless the claims expressly state otherwise.

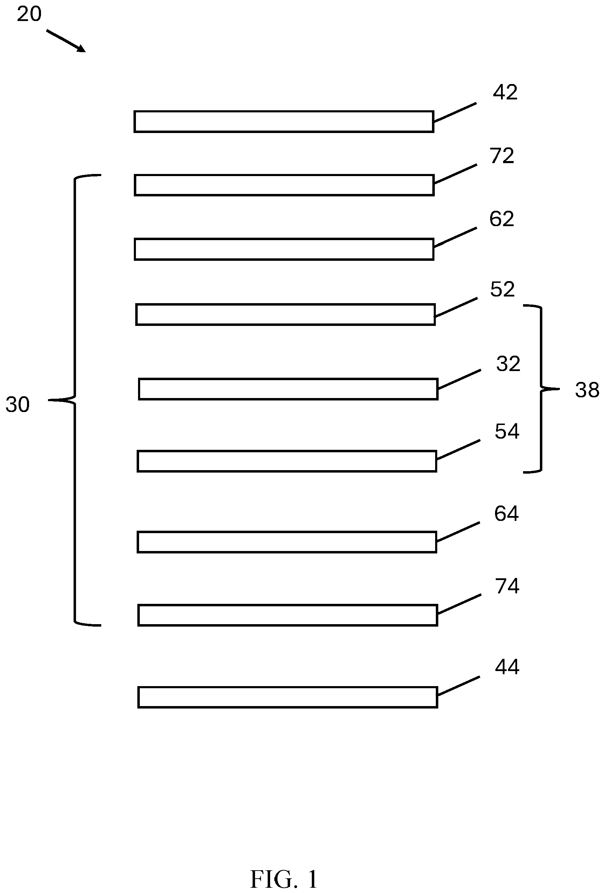

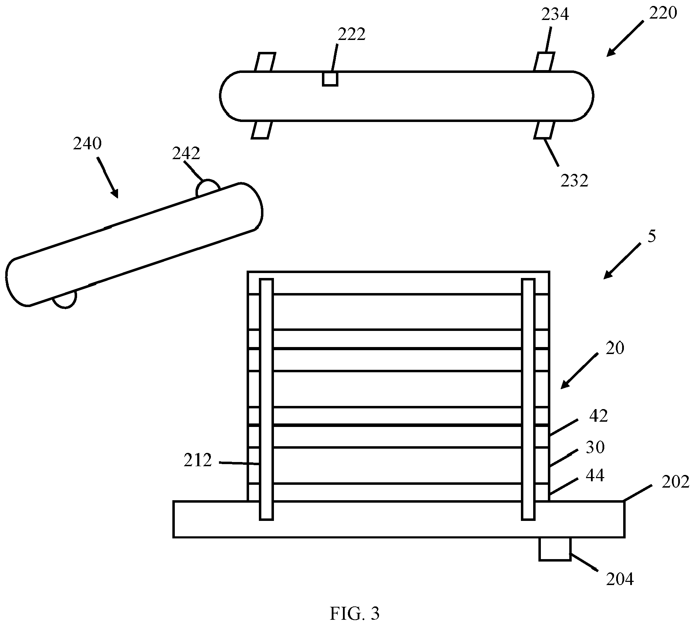

As illustrated in FIG. 1, a fuel cell stack 5 (FIG. 3) may be made of multiple fuel cells 20. Each fuel cell 20 may have a membrane electrode assembly 30. The membrane electrode assembly 30 may have a proton-exchange membrane 32 located in between an anode catalyst layer 54 and a cathode catalyst layer 52. The proton-exchange membrane may be made primarily out of PFSAs, such as Nafion. The cathode catalyst layer 52 may be made primarily out of a precious metal (e.g., platinum), carbon and PFSAs. The anode catalyst layer 54 may be made primarily out of a precious metal (e.g., platinum), carbon, and PFSAs. The cathode catalyst layer 52 may be coupled to a first microporous layer 62. The anode catalyst layer 54 may be coupled to a second microporous layer 64. The first microporous layer 62 and the second microporous layer 64 may be made primarily out of carbon and PTFEs. The first microporous layer 62 may be coupled to a first gas diffusion layer 72. The second microporous layer 64 may be coupled to a second gas diffusion layer 74. The first gas diffusion layer 72 and the second gas diffusion layer 74 may be made primarily out of carbon and PTFEs. The first gas diffusion layer 72 may be coupled to a first bipolar plate 42. The second gas diffusion layer 74 may be coupled to a second bipolar plate 44. The first bipolar plate 42 and the second bipolar plate 44 may be made primarily out of a metal (e.g., steel), ceramic, and/or carbon.

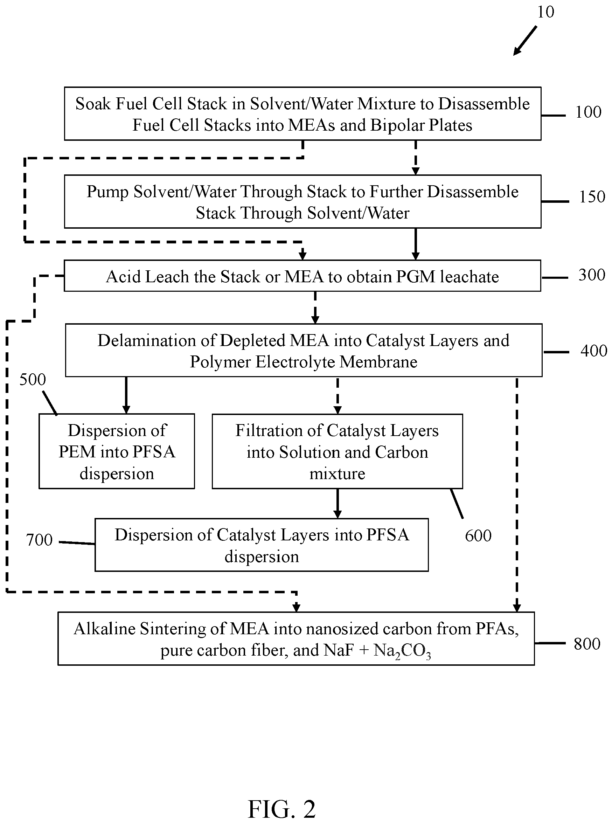

In one illustrative but non-limiting example of the present invention, a recycling process 10 for the fuel cell stack 5 may be illustrated in FIG. 2. In a first soaking process 100, the fuel cell 20 (FIG. 1), a plurality of fuel cells 20, the fuel cell stack 5 (FIG. 3), and/or a plurality of fuel cell stacks 5 (FIG. 3) may be placed in a container with a solvent/water solution. This solvent/water solution may allow for the chemical separation or partial chemical separation of the membrane electrode assembly 30 of the fuel cell 20 from one or more bipolar plates (e.g., the first bipolar plate 42, the second bipolar plate 44) of the fuel cell 20. While the fuel cell 20 has been placed in the solvent/water solution, the membrane electrode assembly 30 and/or other parts of the fuel cell 20 may increase in volume by absorbing the solvent/water solution. This volume change in the membrane electrode assembly 30 may loosen a bonding between the membrane electrode assembly 30 and the first bipolar plate 42 and/or the second bipolar plate 44. Additionally, the solvent/water solution may weaken the bond between the membrane electrode assembly 30 and the first bipolar plate 42 and/or the second bipolar plate 44 through other means. In one illustrative but non-limiting example, the solvent/water solution may be an ethanol/water or an alcohol/water solution. For example, the solvent/water solution may be 40% v/v ethanol/water. Though various temperatures may be used for the solvent/water solution, room temperature for the solvent/water solution may be used without any forced convection of the solvent/water solution. The fuel cell 20 may be soaked in the solvent/water solution for various times, such as 2 hours. The solvent/water solution used in this process may be re-used for multiple soaking processes 100 for other fuel cells 20 and/or fuel cell stacks 5.

After the soaking process 100, the fuel cell 20 may undergo further disassembly or further partial disassembly with a pumping process 150. Using a similar or the same solvent/water solution from the soaking process 100, the pumping process may place the fuel cell 20, the plurality of fuel cells 20, the fuel cell stack 20, and/or the plurality of fuel cell stacks 20 in the container with the solvent/water solution. The fuel cell(s) 20 may be placed in the container such that the solvent/water solution may be pumped through the fuel cell(s) 20 at various positions. For example, the solvent/water solution may be pumped through an internal conduit of the fuel cell(s) 20 and/or the fuel cell stack(s) 5 such as the first gas diffusion layer 72, the second gas diffusion layer 74, an inlet and/or outlet of the anode catalyst layer 54, an inlet and/or outlet of the cathode catalyst layer 52, etc. The pumped solvent/water solution may assist in loosening the bond between the first gas diffusion layer 72 and the first bipolar plate 42 and/or the first gas diffusion layer 44 and the second bipolar plate 44. Alternatively, such a pumping process could be performed without the fuel cell stack being located in a container.

During operation of the fuel cell 20, the first bipolar plate 42 and/or the second bipolar plate 44 may have become bonded to the membrane electrode assembly 30 due to various reasons such as accumulated particulates bonding various parts together. For example, the membrane electrode assembly 30 may become attached to a flow field (not illustrated) of the first bipolar plate 42 and/or the second bipolar plate 44. Such bonding increases the difficulty of separating the membrane electrode assembly 30 from the first bipolar plate 42 and/or the second bipolar plate 44 either manually, through vacuums, or other mechanical methods. Additionally, using these methods to remove these pieces (not illustrated) may cause pieces of, for example, a first gas diffusion layer 72 and/or the second gas diffusion layer 74, to remain on the first bipolar plate 72 and/or the second bipolar plate 74. These remaining pieces may increase the difficulty of recycling these components and reduce the overall efficiency of the recycling process 10. After the soaking process 100 and/or the pumping process 150, the membrane electrode assembly 30 and the first bipolar plate 42 and/or the second bipolar plate 44 may be easily separated either manually or using an automated assembly 200, for example, with a motorized arm (e.g., a blade 232 from FIG. 3) that lifts the first bipolar plate 42, the second bipolar plate 44, and the membrane electrode assembly 30. The motorized arm (e.g., a blade 232 from FIG. 2) may be a part of a larger assembly that also sorts the membrane electrode assembly 30 and the first bipolar plate 42 and the second bipolar plate 44 into various parts for further recycling and/or other uses.

In one illustrative but non-limiting embodiment of the automated disassembly process 200 illustrated in FIG. 3, the fuel cell stack 5 may have one or more instances of the first bipolar plate 42 and/or the second bipolar plate 44 removed. The fuel cell stack 5 may then be fixed on a surface 202 (e.g., a horizontal benchtop). The fuel cell stack 5 may be fixed to the surface 202 through, for example, one or more positioning pins 212. The fuel cell stack 5 may be fixed onto the surface 202 through other means. The surface 202 may be raised or lowered by a motor 204 (e.g., a step motor). Each step of the step motor or each programmed rotation of the motor 204 may match a thickness of the first bipolar plate 42, the second bipolar plate 44, the membrane electrode assembly 30, and/or any other set distance in order to facilitate the disassembly process 200. Additionally, any other type of motor may be used along with a sensor coupled to an actuator in order to facilitate the disassembly process. The positioning pin 212 may be fixed. A blade 232 on a conveyer 220 may remove one bipolar plate (e.g., first bipolar plate 42, second bipolar plate 44) at a time, moving it (for example, towards the left), received by a lower conveyer 240, and transported to a plate collection device (not shown). Though conveyors (e.g., the conveyor 220 and the lower conveyor 240) are illustrated in FIG. 3, any other means of transporting the plates (e.g., first bipolar plate 42, second bipolar plate 44) may be used.

After the first bipolar plate 42 and/or the second bipolar plate 44 may have been removed from the fuel cell stack 5, a second blade 234 may then move the membrane electrode assembly 30. Any other type of device that may move the membrane electrode assembly 30 may be used. By synchronizing speeds of both conveyers (e.g., the convey 220 and the lower conveyor 240), a roller 242 on the lower conveyer 240 may meet the membrane electrode assembly 30 at an appropriate time to guide the membrane electrode assembly 30 to a collector (not illustrated). Though synchronization may be used other forms of coordination may be used in order to facilitate the recycling process. The automated disassembly process 200 illustrated in FIG. 2 may require multiple sensors and well-designed synchronization, sizing, and positioning of the conveyers. The automated assembly process 200 may process multiple stacks simultaneously. The automated assembly process 200 may use the processes described above at different speeds for relatively higher or lower overall runtimes. In another example, such a disassembly process may be performed manually in contrast to automated disassembly process 200 illustrated in FIG. 3. Additionally, fuel cell stacks 5 may be made with different materials and fuel cell stacks 5 may have reserved small gaps between plates (e.g., first bipolar plate 42, second bipolar plate 44) from which a series of hinges with pins may be inserted into to open the fuel cell stacks 5. In this and other designs of fuel cell stacks 5, there may be multiple areas to place a series of hinges with pins or other methods in order to facilitate opening fuel cell stacks 5.

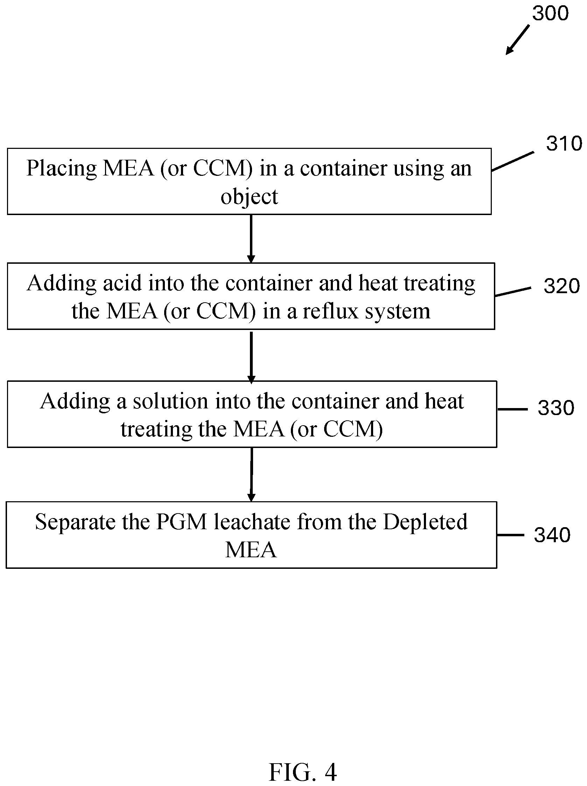

In a non-limiting illustrative example of the recycling process 10, after the membrane electrode assembly 30 and the first bipolar plate 42 and/or the second bipolar plate 44 of the fuel cell 20 may have been separated, the membrane electrode assembly 30 may go through an acid leaching process 300 as illustrated in FIG. 4. As the membrane electrode assembly 30 may contain a precious metal, such as platinum, that may be useful for remanufacturing new fuel cell 20 components such as new membrane electrode assemblies 30, the acid leaching process 300 may extract the precious metal from the membrane electrode assembly 30. The acid leaching process 300 may either remove the cathode catalyst layer 52 and/or the anode catalyst layer 54 from one or both sides of the membrane electrode assembly 30. The first gas diffusion layer 72, the second gas diffusion layer 74, the first microporous layer 62, and the second microporous layer 64 may be removed manually to obtain a catalyst coated membrane 38 (FIG. 1). The catalyst coated membrane 38 and/or the membrane electrode assembly 30 may be separated into pieces or may be placed in their entirety in a container (e.g., a round bottom flask) in step 310. The catalyst coated membrane 38 and/or the membrane electrode assembly 30 may be placed at the bottom of the container using an object or multiple instances of the object (e.g., glass beads). Glass beads may be advantageous for their non-reactive properties, allowing them to place the catalyst coated membrane 38 and/or the membrane electrode assembly 30 at the bottom of the container without significantly influencing a chemical reaction. An acid (e.g., 20 mL of 1 M HNO₃) may then be added into the container. Then, the catalyst coated membrane 38 and/or the membrane electrode assembly 30 in the container may be heat-treated in a reflux system at step 320. In some embodiments, heat-treating the catalyst coated membrane 38 and/or the membrane electrode assembly 30 in a reflux system occurs at a temperature of about 75 °C to about 85 °C, including all ranges, subranges, and values therein, e.g., about 75 °C to about 77 °C, about 77 °C to about 79 °C, about 79 °C to about 81 °C, about 81 °C to about 83 °C, about 83 °C to about 85 °C, about 75 °C to about 80 °C, about 80 °C to about 85 °C, about 75 °C, 76 °C, 77 °C, 78 °C, 79 °C, 80 °C, 81 °C, 82 °C, 83 °C, 84 °C, and 85 °C. In some embodiments, the temperature is 80 °C. In some embodiments, heat-treating the container in a reflux system takes place at a range from 50 minutes to 70 minutes, including all ranges, subranges, and values therein, e.g., about 50 minutes to about 53 minutes, about 53 minutes to about 56 minutes, about 56 minutes to about 59 minutes, about 59 minutes to about 62 minutes, about 62 minutes to about 65 minutes, about 65 minutes to about 68 minutes, about 68 minutes to about 70 minutes, about 50 minutes to about 60 minutes, about 60 minutes to about 70 minutes, about 50 minutes, 51 minutes, 52 minutes, 53 minutes, 54 minutes, 55 minutes, 56 minutes, 57 minutes, 58 minutes, 59 minutes, 60 minutes, 61 minutes, 62 minutes, 63 minutes, 64 minutes, 65 minutes, 66 minutes, 67 minutes, 68 minutes, 69 minutes, and 70 minutes. Next, a solution (e.g., 100 mL of 2 M HCl and 3% (v/v) H₂O₂) may be added into the container, then heat treated in step 330. In some embodiments, heat-treating the catalyst coated membrane 38 and/or the membrane electrode assembly 30 in the container in step 330 occurs at a temperature of about 75 °C to about 85 °C, including all ranges, subranges, and values therein, e.g., about 75 °C to about 77 °C, about 77 °C to about 79 °C, about 79 °C to about 81 °C, about 81 °C to about 83 °C, about 83 °C to about 85 °C, about 75 °C to about 80 °C, about 80 °C to about 85 °C, about 75 °C, 76 °C, 77 °C, 78 °C, 79 °C, 80 °C, 81 °C, 82 °C, 83 °C, 84 °C, and 85 °C. In some embodiments, the temperature is 80 °C. In some embodiments, heat-treating the catalyst coated membrane 38 and/or the membrane electrode assembly 30 in the container in step 330 may occur at a range from about 7.5 hours to about 8.5 hours, including all ranges, subranges, and values therein, e.g., about 7.5 hours to about 7.7 hours, about 7.7 hours to about 7.9 hours, about 7.9 hours to about 8.1 hours, about 8.1 hours to about 8.3 hours, about 8.3 hours to about 8.5 hours, about 7.5 hours to about 8 hours, about 8 hours to about 8.5 hours, about 7.5 hours, about 7.6 hours, about 7.7 hours, about 7.8 hours, about 7.9 hours, about 8.0 hours, about 8.1 hours, about 8.2 hours, about 8.3 hours, about 8.4 hours, and about 8.5 hours. In some embodiments, heat-treating the container in step 330 may occur for 8 hours. A precious metal leaching efficiency, for example a platinum leaching efficiency, above 98% may be achieved by this acid leaching process 300. The acid leaching process 300 may produce a precious metal leachate, for example, a platinum leachate. The acid leaching process 300 may convert the membrane electrode assembly 30 into a precious metal depleted carbon polymer composite, or a depleted membrane electrode assembly. The precious metal leachate may then be separated from the depleted membrane electrode assembly in step 340. The depleted membrane electrode assembly may be used in further processes of the recycling process 10. In an alternative embodiment of the acid leaching process 300, the fuel cell stack 5 (FIG. 3) may go through the steps noted above to produce the precious metal leachate. Though specific metals have been described in this process, any metal that may be used in the membrane electrode assembly 30 may be extracted. Additionally, although specific compounds, temperatures, and time, have been described, multiple compounds, temperatures, and time have been contemplated with the present invention.

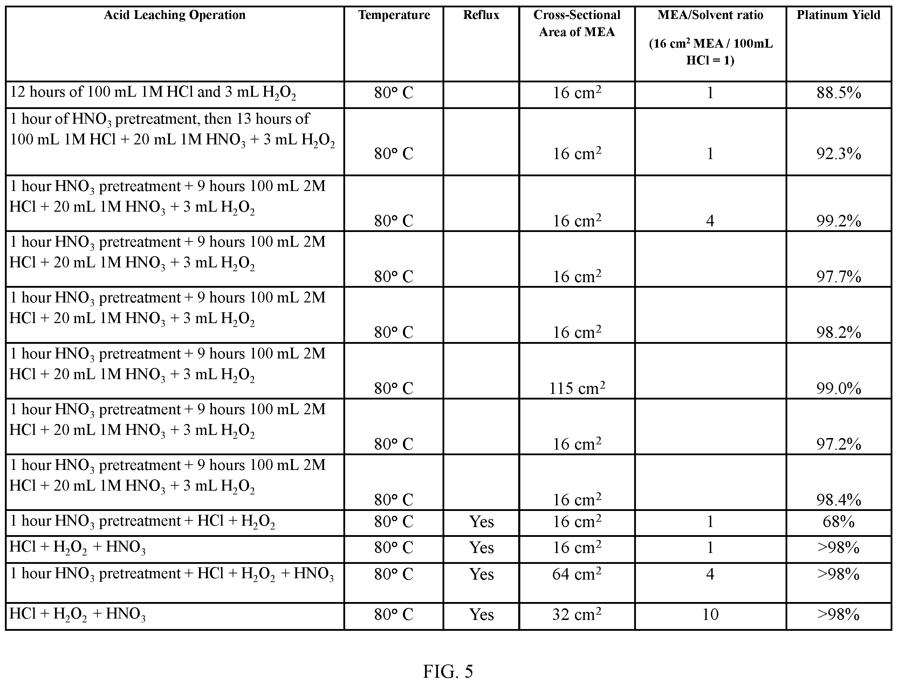

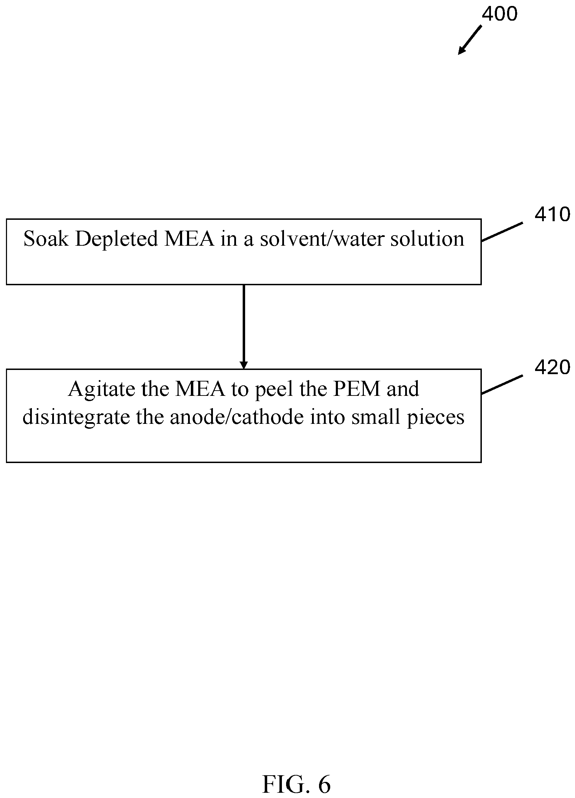

As illustrated in FIG. 5, multiple solutions and conditions may be used for the acid leaching process 300. Different solutions and conditions may be used to reach varying levels of precious metal recoveries. Though specific numbers are provided, the data from FIG. 5 may be extrapolated. As an example, though most experiments illustrated use a 16 cm² piece of the membrane electrode assembly 30, one experiment demonstrates that a platinum yield of 99.0% may still be obtained using a larger piece of the membrane electrode assembly 30 than the other tests, indicating the feasibility of scaling larger membrane electrode assemblies 30 or portions thereof. The different solvents used for these tests include but are not limited to: 100 mL 1 M HCl + 3 mL H₂O₂; 50 mL 1 M HCl + 50 mL EtOH + 3 mL H₂O₂; 100 mL 2M HCl + 3 mL H₂O₂; 100 mL 1M HCl + 20 mL 1M HNO₃ + 3 mL H₂O₂; and 100 mL 2M HCl + 20 mL 1M HNO₃ + 3 mL H₂O₂. Though some of these solvents are not illustrated in FIG. 5, these solvents among others may be used. The last four rows of FIG. 5 may indicate a few preferred, though non-limiting acid-leaching conditions. In one illustrative but non-limiting example, platinum leaching efficiency may steadily reach over 98% by adding 20 mL 2M HCl, 600µL 3% v/v H₂O₂ and 4 mL 1M HNO₃ into a container. A piece of the catalyst coated membrane 38 may be pressed at the bottom of the container. The container may be heat-treated in a reflux system. In some embodiments, heat-treating the container in a reflux system occurs at a temperature of about 75 °C to about 85 °C, including all ranges, subranges, and values therein, e.g., about 75 °C to about 77 °C, about 77 °C to about 79 °C, about 79 °C to about 81 °C, about 81 °C to about 83 °C, about 83 °C to about 85 °C, about 75 °C to about 80 °C, about 80 °C to about 85 °C, about 75 °C, 76 °C, 77 °C, 78 °C, 79 °C, 80 °C, 81 °C, 82 °C, 83 °C, 84 °C, and 85 °C. In some embodiments, heat-treating the container may occur at a range from about 8.5 hours to about 9.5 hours, including all ranges, subranges, and values therein, e.g., about 8.5 hours to about 8.7 hours, about 8.7 hours to about 8.9 hours, about 8.9 hours to about 9.1 hours, about 9.1 hours to about 9.3 hours, about 9.3 hours to about 9.5 hours, about 8.5 hours to about 9 hours, about 9 hours to about 9.5 hours, about 8.5 hours, about 8.6 hours, about 8.7 hours, about 8.8 hours, about 8.9 hours, about 9.0 hours, about 9.1 hours, about 9.2 hours, about 9.3 hours, about 9.4 hours, and about 9.5 hours. In some embodiments, heat-treating the container may occur for 9 hours. Alternatively, the membrane electrode assembly 30 may be added to the leaching solution, pressed at the bottom of the container by objects such as glass beads and heat treated. In some embodiments, heat-treating the container occurs at a temperature of about 75 °C to about 85 °C, including all ranges, subranges, and values therein, e.g., about 75 °C to about 77 °C, about 77 °C to about 79 °C, about 79 °C to about 81 °C, about 81 °C to about 83 °C, about 83 °C to about 85 °C, about 75 °C to about 80 °C, about 80 °C to about 85 °C, about 75 °C, 76 °C, 77 °C, 78 °C, 79 °C, 80 °C, 81 °C, 82 °C, 83 °C, 84 °C, and 85 °C. In some embodiments, the temperature is 80 °C. As illustrated in FIG. 6, after the acid leaching process 300, the depleted membrane electrode assembly may go through a delamination process 400 to separate the polymer electrolyte membrane 32 from the cathode catalyst layer 52 and/or the anode catalyst layer 54 of the fuel cell 20. Additionally, the delamination process 400 may disintegrate the cathode catalyst layer 52 and/or the anode catalyst layer 54 into small pieces 422. During the delamination process 400, the depleted membrane electrode assembly may be immersed in a solvent/water solution in step 410. The solvent/water solution may be a 1:1 ethanol/water solution. The depleted membrane electrode assembly may be agitated in step 420. In some embodiments, the depleted membrane electrode assembly may be agitated in step 420 at a temperature of about 70 °C to about 80 °C, including all ranges, subranges, and values therein, e.g., about 70 °C to about 72 °C, about 72 °C to about 74 °C, about 74 °C to about 76 °C, about 76 °C to about 78 °C, about 78 °C to about 80 °C, about 70 °C to about 75 °C, about 75 °C to about 80 °C, about 70 °C, 71 °C, 72 °C, 73 °C, and 74 °C, 75 °C, 76 °C, 77 °C, 78 °C, 79 °C, and 80 °C. In some embodiments, the depleted membrane electrode assembly may be agitated in step 420 at 75°C. In some embodiments, the depleted membrane electrode assembly may be agitated in step 420 at an rpm of about 290 rpm to about 310 rpm, including all ranges, subranges, and values therein, e.g., about 290 rpm to about 294 rpm, about 294 rpm to about 298 rpm, about 298 rpm to about 302 rpm, about 302 rpm to about 306 rpm, about 306 rpm to about 310 rpm, about 290 rpm to about 300 rpm, about 300 rpm to about 310 rpm, about 290 rpm, about 291 rpm, about 292 rpm, about 293 rpm, about 294 rpm, about 295 rpm, about 296 rpm, about 297 rpm, about 298 rpm, about 299 rpm, about 300 rpm, about 301 rpm, about 302 rpm, about 303 rpm, about 304 rpm, about 305 rpm, about 306 rpm, about 307 rpm, about 308 rpm, about 309 rpm, and about 310 rpm. In some embodiments, the depleted membrane electrode assembly may be agitated at 300 rpm. The agitation in step 420 of the depleted membrane electrode assembly may occur at a range between about 25 minutes and about 35 minutes, including all ranges, subranges, and values therein, e.g., about 25 minutes to about 27 minutes, about 27 minutes to about 29 minutes, about 29 minutes to about 31 minutes, about 31 minutes to about 33 minutes, about 33 minutes to about 35 minutes, about 25 minutes to about 30 minutes, about 30 minutes to about 35 minutes, about 25 minutes, about 26 minutes, about 27 minutes, about 28 minutes, about 29 minutes, about 30 minutes, about 31 minutes, about 32 minutes, about 33 minutes, about 34 minutes, and about 35 minutes. In some embodiments, the agitation of the depleted membrane electrode assembly may occur for 30 minutes. The agitation in step 420 of the depleted membrane electrode assembly may fully delaminate the depleted membrane electrode assembly.

Returning to FIG. 1, the solvent/water solution 402 from the delamination process 400 may then be used for the dispersion process 500. The dispersion process 500 may also disperse the PFSA in the depleted membrane electrode assembly. During the dispersion process 500, the polymer electrolyte membrane 32 may be separated into pieces or kept whole and may be placed into a container (e.g., a digestion vessel) with the solvent/water solution or another solution where a hydrothermal reaction may take place. In some embodiments, the hydrothermal reaction takes place at a temperature of about 200 °C to about 220 °C, including all ranges, subranges, and values therein, e.g., about 200 °C to about 204 °C, about 204 °C to about 208 °C, about 208 °C to about 212 °C, about 212 °C to about 216 °C, about 216 °C to about 220 °C, about 200 °C to about 210 °C, about 210 °C to about 220 °C, about 200°C, 201 °C, 202 °C, 203 °C, and 204 °C, 205 °C, 206 °C, 207 °C, 208 °C, 209 °C, 210 °C, 210 °C, 211 °C, 212 °C, 213 °C, and 214 °C, 215 °C, 216 °C, 217 °C, 218 °C, 219 °C, and 220 °C. In some embodiments, the hydrothermal reaction takes place at about 210°C. In some embodiments, the hydrothermal reaction takes place at a range from about 2.5 hours to about 3.5 hours, including all ranges, subranges, and values therein, e.g., about 2.5 hours to about 2.7 hours, about 2.7 hours to about 2.9 hours, about 2.9 hours to about 3.1 hours, about 3.1 hours to about 3.3 hours, about 3.3 hours to about 3.5 hours, about 2.5 hours to about 3 hours, about 3 hours to about 3.5 hours, about 2.5 hours, about 2.6 hours, about 2.7 hours, about 2.8 hours, about 2.9 hours, about 3.0 hours, about 3.1 hours, about 3.2 hours, about 3.3 hours, about 3.4 hours, and about 3.5 hours. In some embodiments, the hydrothermal reaction takes place for 3 hours. This may allow for the PFSA dispersion, for example Nafion, to be obtained. The dispersion process 500 may result in a PFSA dispersion yield greater than 95%.

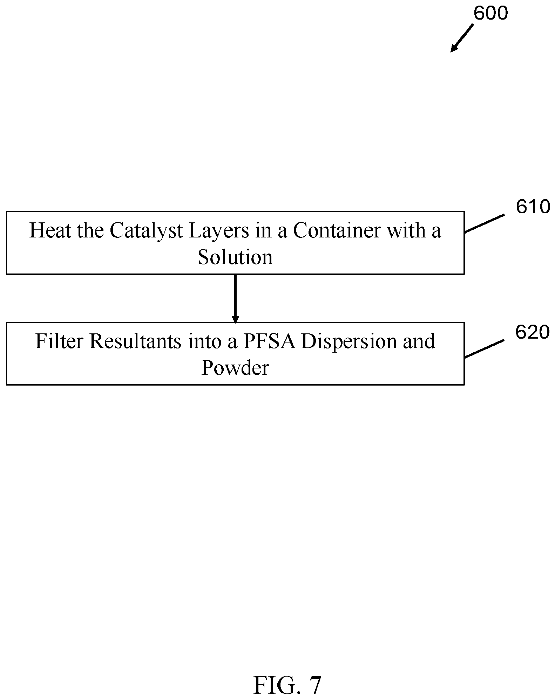

As illustrated in FIG. 7, the cathode catalyst layer 52 and/or the anode catalyst layer 54 from the delamination process 400 may go through a filtration process 600. During the filtration process 600, the cathode catalyst layer 52 and/or the anode catalyst layer 54 may be placed into a container (e.g., a digestion vessel) with a solution (e.g., 1:1 EtOH/water). The filtration process 600 may put the cathode catalyst layer 52 and/or the anode catalyst layer 54 through a hydrothermal reaction in step 610 that takes place, for example, at a specific temperature for a duration of time. In some embodiments, the hydrothermal reaction in step 610 takes place at a temperature of about 200 °C to about 220 °C, including all ranges, subranges, and values therein, e.g., about 200 °C to about 204 °C, about 204 °C to about 208 °C, about 208 °C to about 212 °C, about 212 °C to about 216 °C, about 216 °C to about 220 °C, about 200 °C to about 210 °C, about 210 °C to about 220 °C, about 200 °C, 201 °C, 202 °C, 203 °C, and 204 °C, 205 °C, 206 °C, 207 °C, 208 °C, 209 °C, 210 °C, 210 °C, 211 °C, 212 °C, 213 °C, and 214 °C, 215 °C, 216 °C, 217 °C, 218 °C, 219 °C, and 220 °C. In some embodiments, the hydrothermal reaction in step 610 takes place at about 210°C. In some embodiments, the hydrothermal reaction in step 610 takes place at a range from about 2.5 hours to about 3.5 hours, including all ranges, subranges, and values therein, e.g., about 2.5 hours to about 2.7 hours, about 2.7 hours to about 2.9 hours, about 2.9 hours to about 3.1 hours, about 3.1 hours to about 3.3 hours, about 3.3 hours to about 3.5 hours, about 2.5 hours to about 3 hours, about 3 hours to about 3.5 hours, about 2.5 hours, about 2.6 hours, about 2.7 hours, about 2.8 hours, about 2.9 hours, about 3.0 hours, about 3.1 hours, about 3.2 hours, about 3.3 hours, about 3.4 hours, and about 3.5 hours. In some embodiments, the hydrothermal reaction in step 610 takes place for 3 hours. Then, the resulting mixture may be filtered in step 620, for example, through double filtered paper with, for example 2.5-µm pore size. This may result in a PFSA dispersion, wherein the yield of PFSA from the cathode catalyst layer 52 and/or the anode catalyst layer 54 may be greater than 80%. The filtration may also put the remaining powders, which may consist of carbon and other materials, on filter paper.

Returning to FIG. 1, the PFSA dispersion from the filtration process 600 may be used in the dispersion process 700. The dispersion process 700 may omit the filtration process 600 and use the cathode catalyst layer 52 and/or the anode catalyst layer 54 from the delamination process 400. The solvent/water solution from the delamination process 400, or another solution, may be used in the dispersion process 700. The dispersion process 700 may disperse the PFSA from the cathode catalyst layer 52 and/or the anode catalyst layer 54. During the dispersion process 700, the cathode catalyst layer 52 and/or the anode catalyst layer 54 from the filtration process 600 or the delamination process 400 may be separated into pieces or may be kept whole and may be placed in a container (e.g., a digestion vessel) with a solution (e.g., 1:1 ethanol/water) where a hydrothermal reaction may take place in step 710, for example, at a specific temperature for a duration of time. In some embodiments, the hydrothermal reaction in step 710 takes place at a temperature of about 200 °C to about 220 °C, including all ranges, subranges, and values therein, e.g., about 200 °C to about 204 °C, about 204 °C to about 208 °C, about 208 °C to about 212 °C, about 212 °C to about 216 °C, about 216 °C to about 220 °C, about 200 °C to about 210 °C, about 210 °C to about 220 °C, about 200 °C, 201 °C, 202 °C, 203 °C, and 204 °C, 205 °C, 206 °C, 207 °C, 208 °C, 209 °C, 210 °C, 210 °C, 211 °C, 212 °C, 213 °C, 214 °C, 215 °C, 216 °C, 217 °C, 218 °C, 219 °C, and 220 °C. In some embodiments, the hydrothermal reaction in step 710 takes place at about 210 °C. In some embodiments, the hydrothermal reaction in step 710 takes place at a range from about 2.5 hours to about 3.5 hours, including all ranges, subranges, and values therein, e.g., about 2.5 hours to about 2.7 hours, about 2.7 hours to about 2.9 hours, about 2.9 hours to about 3.1 hours, about 3.1 hours to about 3.3 hours, about 3.3 hours to about 3.5 hours, about 2.5 hours to about 3 hours, about 3 hours to about 3.5 hours, about 2.5 hours, about 2.6 hours, about 2.7 hours, about 2.8 hours, about 2.9 hours, about 3.0 hours, about 3.1 hours, about 3.2 hours, about 3.3 hours, about 3.4 hours, and about 3.5 hours. In some embodiments, the hydrothermal reaction in step 710 takes place for 3 hours. This may allow for a PFSA dispersion, for example Nafion, to be obtained.

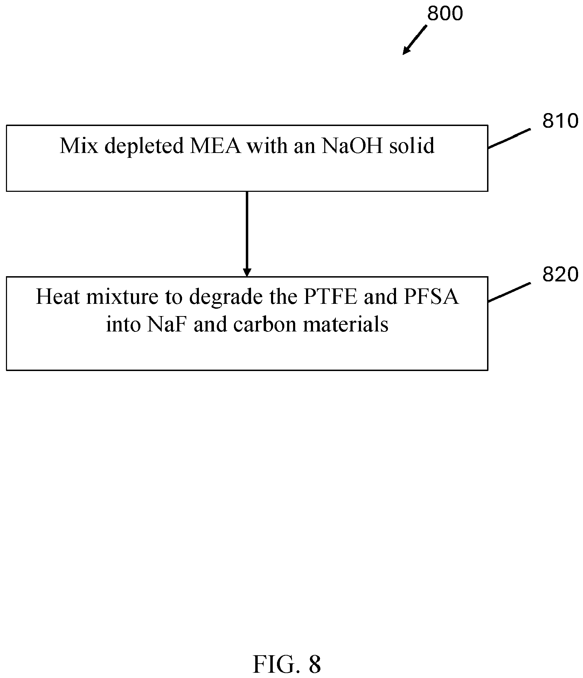

In one illustrative but non-limiting embodiment of the recycling process 10, after the acid leaching process 300, the recycling process may instead go through a sintering process 800 instead of a delamination process 400. Referring to FIG. 8, in the sintering process 800, the depleted membrane electrode assembly may be mixed with a base in step 810, for example an NaOH solid to create a mixture. The mixture may be heated in step 820 to degrade PTFE and PFSA in the depleted membrane electrode assembly into NaF and carbon materials. In some embodiments, the mixture may be heated to a temperature of about 340 °C to about 360 °C, including all ranges, subranges, and values therein, e.g., about 340 °C to about 344 °C, about 344 °C to about 348 °C, about 348 °C to about 352 °C, about 352 °C to about 356 °C, about 356 °C to about 360 °C, about 340 °C to about 350 °C, about 350 °C to about 360 °C, about 340 °C, 341 °C, 342 °C, 343 °C, 344 °C, 345 °C, 346 °C, 347 °C, 348 °C, 349 °C, 350 °C, 351 °C, 352 °C, 353 °C, and 354 °C, 355 °C, 356 °C, 357 °C, 358 °C, 359 °C, 360 °C. In some embodiments, the mixture may be heated to 350°C. This conversion may occur without significant or any gas emissions. The entire depleted membrane electrode assembly may be sintered in its entirety or by pieces.

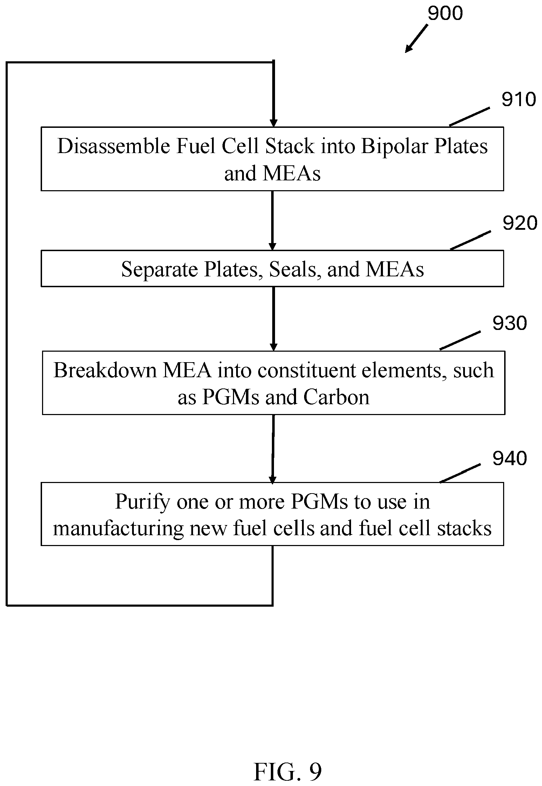

As illustrated in FIG. 9, the processes of the fuel cell recycling process 10 depicted in FIG. 1, may form a closed loop recycling process for fuel cell(s) 20 and/or fuel cell stack(s) 5. The processes illustrated above may add additional processes, omit processes, and reorder processes as needed. First, multiple membrane electrode assemblies 30 may be manufactured and/or assembled to create fuel cells 20. The fuel cells 20 may be connected, creating a fuel cell stack 5. After a fuel cell stack 5 may have been assembled, the fuel cell stack 5 may have gone through an extended operation, reducing the stack's 5 efficiency. As the stack's 5 efficiency may have been reduced, the stack 5 may require recycling so that new membrane electrode assemblies 30 may be assembled. The recycling process 10 may begin by disassembling fuel cells 20 into bipolar plates (e.g., the first bipolar plate 42 and the second bipolar plate 44) and membrane electrode assemblies 30 in step 910. From there, the plates (e.g., the first bipolar plate 42 and the second bipolar plate 44), seals (not illustrated), and membrane electrode assemblies 30 may further be separated in step 920. The resulting membrane electrode assembly 30 may be disassembled into constituent parts, such as carbon, precious metals (e.g., iridium, platinum), perfluorinated ionomers, and other parts in step 930. Each part may then be further purified in step 940 so that the parts may be used to manufacture a new membrane electrode assembly 30, based on recycled components from a used membrane electrode assembly 30. Additional components may or may not be needed to manufacture a new membrane electrode assembly 30 from the recycled components of a used membrane electrode assembly 30.

As may be recognized by those of ordinary skill in the art based on the teachings herein, numerous changes and modifications may be made to the above-described, and other embodiments of the present disclosure without departing from the scope of the disclosure. The components of the fuel cell stack and membrane electrode assembly disassembly for component separation and recycling as disclosed in this application may be replaced by alternative component(s) or feature(s), such as those disclosed in another embodiment, which serve the same, equivalent or similar purpose as known by those skilled in the art to achieve the same, equivalent or similar results by such alternative component(s) or feature(s) to provide a similar function for the intended purpose. For example, any mention of a compound or solution used in the recycling process for fuel cells should be construed as an example of the type of compound or solution used in that process. Other compounds of a similar chemical structure or similar effect may be used. Temperatures are mentioned for various reactions and these temperatures should be construed as one example of a wide range of temperatures that may be altered based on the amount of products going into the reaction and the desired outputs, the size of the container, the type of solution used, the desired efficiency, etc. Various times are discussed which should be construed as one example, but various times may also be used. In addition, the fuel cell stack and membrane electrode assembly disassembly for component separation and recycling may include more or fewer components or features than the embodiments as described, illustrated, and attached herein. The present invention is intended to cover all past, present, and future versions and iterations of fuel cells and are intended to work with all such embodiments. Accordingly, this detailed description of the currently preferred embodiments is to be taken in an illustrative, as opposed to limiting of the disclosure. Further, the descriptions of fuel cell stack recycling described herein are applicable to electrolyzer stacks as described in the co-owned patent application referenced above and filed as the same day as the present patent application.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprise" (and any form of comprise, such as "comprises" and "comprising"), "have" (and any form of have, such as "has", and "having"), "include" (and any form of include, such as "includes" and "including"), and "contain" (and any form of contain, such as "contains" and "containing") are open-ended linking verbs. As a result, a method or device that "comprises," "has," "includes," or "contains" one or more processes or elements possesses those one or more processes or elements but is not limited to possessing only those one or more processes or elements. Likewise, a step of a method or an element of a device that "comprises," "has," "includes," or "contains" one or more features possesses those one or more features but is not limited to possessing only those one or more features. Furthermore, a device or structure that is configured in a certain way is configured in at least that way but may also be configured in ways that are not listed.

The disclosure has been described with reference to the preferred embodiments. It will be understood that the embodiments described herein are exemplary of a plurality of possible arrangements to provide the same general features, characteristics, and general system operation. Modifications and alterations will occur to others upon a reading and understanding of the preceding detailed description. It is intended that the disclosure be construed as including all such modifications and alterations.

## Claims

1. A method for use in recycling a fuel cell stack, comprising:
inserting a fuel cell comprising a first plate, a second plate, and a membrane electrode assembly therebetween in a first solution to allow a loosening of a first bond between the first plate and the membrane electrode assembly and a second bond between the second plate and the membrane electrode assembly;
separating the membrane electrode assembly from the first plate and the second plate; and
acid leaching the membrane electrode assembly to obtain a precious metal.

2. The method of claim 1, wherein the acid leaching further comprises:
acid leaching the membrane electrode assembly to obtain a depleted membrane electrode assembly.

3. The method of claim 1, wherein the loosening comprises the membrane electrode assembly absorbing the first solution to increase a volume of the membrane electrode assembly.

4. The method of claim 1, wherein the separating the membrane electrode assembly from the first plate and the second plate comprises manually separating the first plate and the second plate from the membrane electrode assembly.

5. The method of claim 1, wherein the separating the membrane electrode assembly from the first plate and the second plate comprises separating the first plate and the second plate from the membrane electrode assembly by a motorized arm lifting the first plate, the membrane electrode assembly, and/or the second plate.

6. The method of claim 1, wherein the acid leaching comprises:
inserting the membrane electrode assembly into a container;
placing an object on top of the membrane electrode assembly;
inserting HNO₃ into the container;
heat-treating the container in a reflux system at a temperature in the range of about 75 °C to about 85 °C for about 50 minutes to about 70 minutes;
inserting HCl and 3% v/v H₂O₂ into the container;
heat treating the container at a temperature in the range of about 75 °C to about 85 °C for about 7.5 hours to about 8.5 hours.

7. The method of claim 1, further comprising:
pumping a second solution through an internal conduit of the fuel cell stack to assist the loosening of the first bond and the second bond.

8. The method of claim 1, wherein the precious metal is platinum.

9. The method of claim 2, further comprising:
alkaline sintering the depleted membrane electrode assembly.

10. The method of claim 9, wherein the alkaline sintering further comprises:
mixing the depleted membrane electrode assembly with a solid NaOH; and
heating the depleted membrane electrode assembly and the solid NaOH to 340 °C to about 360 °C.

11. The method of claim 2, further comprising:
separating the membrane electrode assembly into a polymer electrolyte membrane and a plurality of catalyst layers;
dispersing the polymer electrolyte membrane into a PFSA dispersion; and
dispersing the plurality of catalyst layers.

12. The method of claim 11, wherein the dispersing the plurality of catalyst layers further comprises:
filtering the plurality of catalyst layers into a third solution and a carbon mixture; and
dispersing the third solution into a second PFSA dispersion.

13. The method of claim 11, wherein the dispersing the plurality of catalyst layers disperses into a second PFSA dispersion.

14. The method of claim 13, wherein the separating the membrane electrode assembly into a polymer electrolyte membrane and a plurality of catalyst layers comprises:
inserting the membrane electrode assembly into a container;
inserting an 1:1 alcohol/water solution into the container;
heating the container to a temperature in the range of about 70 °C to about 80 °C; and
spinning the container in the range of about 290 rpm to about 310 rpm for about 25 minutes to about 35 minutes.

15. The method of claim 13, wherein the dispersing the polymer electrolyte membrane comprises:
inserting the polymer electrolyte membrane in a container;
inserting an 1: 1 alcohol/water solution into the container; and
heating the container to a temperature in the range of about 200 °C to about 210 °C for about 2.5 hours to about 3.5 hours.

16. The method of claim 13, wherein the dispersing the plurality of catalyst layers comprises:
inserting the polymer electrolyte membrane in a container;
inserting an 1: 1 alcohol/water solution into the container; and
heating the container to a temperature of about 200 °C to about 220 °C for about 2.5 hours to about 3.5 hours.

17. The method of claim 13, wherein the first solution is 40% volume / volume ethanol / water at about room temperature without forced convection.

18. A method for use in recycling a fuel cell stack, comprising:
applying a solvent to a first plate, a second plate, and a membrane electrode assembly of a fuel cell to cause the membrane electrode assembly to absorb the solvent to loosen a first bond between the first plate and the membrane electrode assembly and a second bond between the second plate and the membrane electrode assembly; and
separating the membrane electrode assembly from the first plate and the second plate.

19. The method of claim 18 further comprising extracting precious metal from the membrane electrode assembly of the fuel cell stack.

20. The method of claim 19 wherein the extracting the precious metal comprises acid leaching the membrane electrode assembly to extract the precious metal.
